(19) Europäisches Patentamt / European Patent Office / Office européen des brevets

(11) **EP 3 677 624 B1**

(12) **EUROPEAN PATENT SPECIFICATION**

(45) Date of publication and mention
of the grant of the patent:
**18.05.2022 Bulletin 2022/20**

(21) Application number: **18850939.2**

(22) Date of filing: **26.07.2018**

(51) International Patent Classification (IPC):
**C08J 9/18** (2006.01)        **B29C 44/00** (2006.01)

(52) Cooperative Patent Classification (CPC):
**C08J 9/18; B29C 44/3426; B29C 44/3461;
B29C 44/445; C08J 9/232; C08J 9/36;**
B29K 2069/00; C08J 9/122; C08J 2201/034;
C08J 2203/06; C08J 2369/00

(86) International application number:
**PCT/JP2018/028098**

(87) International publication number:
**WO 2019/044298 (07.03.2019 Gazette 2019/10)**

(54) **BEAD FOAM, RESIN COMPOSITE PROVIDED WITH SAME, AND METHOD FOR PRODUCING BEAD FOAM**

PARTIKELSCHAUM, DAMIT AUSGESTATTETER HARZVERBUND UND VERFAHREN ZUR HERSTELLUNG VON PARTIKELSCHAUM

MOUSSE DE PERLES, COMPOSITE DE RÉSINE POURVU DE CELLE-CI ET PROCÉDÉ DE PRODUCTION DE MOUSSE DE PERLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2017   JP 2017167471
26.10.2017   JP 2017207558**

(43) Date of publication of application:
**08.07.2020   Bulletin 2020/28**

(73) Proprietor: **Sekisui Kasei Co., Ltd.
Osaka-shi, Osaka 530-0047 (JP)**

(72) Inventors:
• **KOBAYASHI, Hironori
Osaka-shi
Osaka 530-0047 (JP)**
• **FURUNAGA, Haruka
Osaka-shi
Osaka 530-0047 (JP)**

(74) Representative: **Hoffmann Eitle
Patent- und Rechtsanwälte PartmbB
Arabellastraße 30
81925 München (DE)**

(56) References cited:
EP-A1- 2 955 015        WO-A1-00/35650
JP-A- H0 822 563        JP-A- H08 187 810
JP-A- 2005 015 592      JP-A- 2010 195 936
JP-A- 2010 195 936      JP-A- 2013 067 740
JP-A- 2013 067 740      JP-A- 2016 026 911

EP 3 677 624 B1

**Description**

TECHNICAL FIELD

The present invention relates to a bead expanded article, a resin composite comprising the same, and a method for producing a bead expanded article. More particularly, the present invention relates to a bead expanded article that can provide a resin composite excellent in strength, lightness and appearance, a method for producing the same, and a resin composite excellent in strength, lightness and appearance.

BACKGROUND TECHNOLOGY

Since a fiber-reinforced resin referred to as FRP can provide a product that is lightweight and has high mechanical strength, it has been widely used. A product produced from a fiber-reinforced resin is required to further save its weight. Furthermore, since it is difficult to obtain a three-dimensional shaped product from only a fiber-reinforced resin, it is also required to overcome this difficulty.

In response to the above-mentioned requirement, in recent years, a product has been proposed that is composed of a resin composite in which a resin expanded article is used as a core material and the core material is covered with a sheet-like fiber-reinforced resin (see Japanese Unexamined Patent Application, First Publication No. 2016-188341: Patent Document 1). In this gazette, use of a bead expanded article has been proposed from which a three-dimensional shape can be relatively and simply prepared as a core material of a resin composite. Furthermore, Patent Document 1 describes that since the bead expanded article has high lightness, a product having both the strength and lightness of the fiber-reinforced resin can be provided.

JP 2016 188341 A discloses an aromatic polycarbonate-based bead foam having good formability, moldability and appearance, which can be further used as a FRP core material in composite members.

PRIOR ART DOCUMENTS

Patent Documents

Patent Document 1: Japanese Unexamined Patent Application, First Publication No. 2016-188341

SUMMARY OF THE INVENTION

PROBLEM TO BE SOLVED BY THE INVENTION

As a method for producing a resin composite, there is a method of forming a fiber-reinforced resin layer derived from a fiber-reinforced resin material referred to as a prepreg sheet in which a fiber sheet is impregnated with a resin to carry the resin on a surface of a bead expanded article. This method is specifically a method for producing a resin composite by temporarily bonding the bead expanded article and the fiber-reinforced resin material to once prepare a pre-composite and pressurizing the pre-composite under heating environment such as heat pressing, to thereby laminate and integrate the fiber-reinforced resin material and the bead expanded article.

Uniform application of pressure to the fiber-reinforced resin material during the production of the resin composite and uniform elongation of the resin carried by the fiber-reinforced resin layer on a surface layer part of the fiber-reinforced resin layer greatly affect the surface appearance of the resin composite. For that reason, when the compression strength of the bead expanded article to be laminated and integrated is weak, the surface appearance of the resin composite may be deteriorated. In that case, there are problems that many voids are generated on the surface of the resulting resin composite and a portion is formed where fibers are considerably exposed on the surface.

MEANS FOR SOLVING THE PROBLEM

As a method of solving the above-mentioned problems, increase in compression strength by increasing a density of a bead expanded article is considered. However, in that case, an unnecessary increase in mass is caused in a resin composite. Accordingly, it has been difficult to prepare a resin composite that is excellent in strength and lightness, and has good appearance. Then, in view of the above-mentioned problems, the present inventors have unexpectedly found that when a relationship between a 10% compression stress and a density of a bead expanded article is within a specific range, a resin composite excellent in strength, lightness, and appearance can be provided, leading to the present invention.

Thus, the present invention provides a bead expanded article as defined in claims 1-3.

Also, the present invention provides a resin composite comprising a bead expanded article as a core material and a fiber-reinforced resin layer covering the core material, wherein the core material is the bead expanded article.

Further, the present invention provides a method for producing a bead expanded article, comprising steps of:

impregnating a thermoplastic resin composition containing a polycarbonate-based resin having an aromatic skeleton as a main component with a blowing agent to prepare expandable particles;

preparing pre-expanded particles by heating the expandable particles;

applying an internal pressure for imparting secondary expanding power to the pre-expanded particles; and

filling a mold with the pre-expanded particles to which the internal pressure is applied and introducing steam to the mold to secondarily expand the pre-expanded particles to which the internal pressure is applied, to obtain a bead expanded article,

wherein

the steam is introduced into the mold at a pressure of 0.8 MPa (absolute pressure) or more,

the internal pressure is applied to the pre-expanded particles so as to satisfy an equation below: internal pressure of cell at molding (Pm, absolute pressure: MPa) $\geq$ water vapor pressure at molding (Ps, absolute pressure: MPa),

the Pm is calculated by an equation below:

$$Pm = Pf \times (Ts + 273)/293 \times V/Vm$$

(wherein, Pf is an internal pressure of cell (MPa) in the pre-expanded particles, Ts is a saturated steam temperature (°C) at a steam pressure, V is a volume ($cm^3$) of a space in the pre-expanded particles, and Vm is a volume ($cm^3$) of a space in the pre-expanded particles after the pre-expanded particles are secondarily expanded with steam and are filled in the mold without gap),

the Pf, V and Vm are calculated by equations below:

$$Pf = 8.31 \times 293 \times (0.1 \times V/8.31/293 + W/M)/V$$

$$V = 60/\rho0 - 100/\rho s$$

$$Vm = 60/\rho0/0.6 - 100/\rho s$$

(wherein, W is an internal pressure application amount (% by mass), M is a molecular weight (g) of an internal pressure application gas, $\rho0$ is a bulk density ($g/cm^3$) of the pre-expanded particles, and $\rho s$ is a density ($g/cm^3$) of the thermoplastic resin composition),

the Ts is calculated by an equation below:

$$Ts = 237.3 \times Log\,(Ps \times 10000/6.1078)/(7.5 - Log\,(Ps \times 10000/6.1078)).$$

EFFECTS OF INVENTION

The present invention can provide a resin composite excellent in strength, lightness, and appearance, and a bead expanded article from which the resin composite can be produced.

Any of the following cases can provide a resin composite more excellent in strength, lightness, and appearance, and a bead expanded article from which the resin composite can be produced.

(1) The bead expanded article has a property that an average air permeability resistance measured from a piece cut from the bead expanded article is 30 s or more.

(2) The bead expanded article is used in formation of a resin composite containing the bead expanded article as a core material and a fiber-reinforced resin layer covering the core material.

(3) The bead expanded article has a fusion rate of 50% or more.

BRIEF DESCRIPTION OF THE DRAWINGS

Fig. 1 is a schematic view of a resin composite of the present invention.
Fig. 2 is a schematic cross-sectional view of the resin composite in Fig. 1.
Fig. 3 is a schematic cross-sectional view of the vicinity of a fiber-reinforced resin layer in Fig. 2.

BEST MODE FOR CARRYING OUT THE INVENTION

(Bead Expanded Article)

A bead expanded article according to the present invention contains a plurality of expanded particles. Furthermore, the bead expanded article contains a thermoplastic resin composition containing a polycarbonate-based resin having an aromatic skeleton as a main component, and has a property that a value obtained by dividing a 10% compression stress (MPa) by a density (g/cm$^3$) of the expanded article is 9.0 (MPa·cm$_3$/g) or more, has an open cell rate of 10% or less, and has a density of 0.2 g/cm$^3$ or less.

The bead expanded article will be described below mainly concerning the case where as a resin composite, a bead expanded article that is to be a core material is formed by a resin excellent in heat resistance.

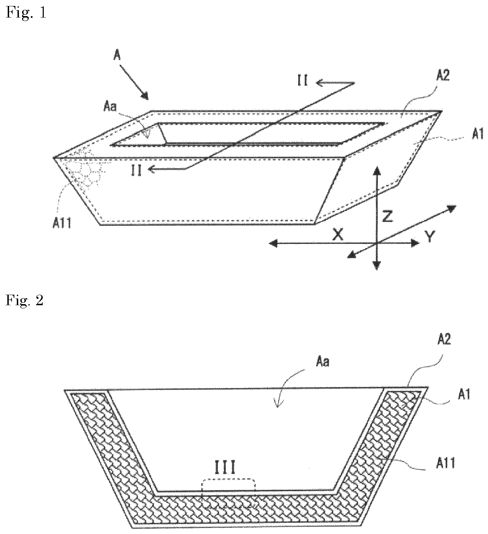

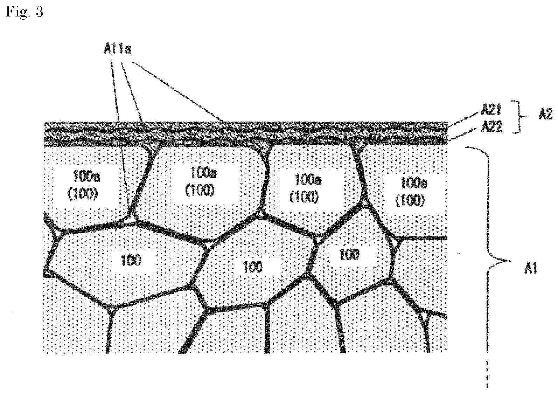

Fig. 1 is a schematic view of a resin composite. Fig. 2 is a schematic cross-sectional view of the resin composite in Fig. 1. Fig. 3 is a schematic cross-sectional view of the vicinity of a fiber-reinforced resin layer in Fig. 2. As shown in the figures, a resin composite A has an inverted square cone (inverted truncated square cone) shape, and on its upper surface side, an inverted square cone-shaped recessed part Aa is formed. In other words, the resin composite A has a square type tray shape in which a rectangular portion in planar view serving as a bottom of the recessed part Aa is a bottom face part and has a shape including a rectangular frame-like circumstantial side wall part that rises up widely outward from an outer peripheral edge of the bottom face part.

In addition, in the description below, a transverse direction (direction of arrow X) in Fig. 1 may be referred to as "transverse direction", "width direction" or "crosswise direction", and a depth direction (direction of arrow Y) may be referred to as "longitudinal direction", "length direction" or "front-back direction". Furthermore, in the description below, a direction along a plane parallel with the transverse direction X and the depth direction Y may be referred to as "horizontal direction", and a direction orthogonal to the plane (direction of arrow Z) may be referred to as "thickness direction", "upper/lower direction", "height direction" or "vertical direction".

As shown in Figs. 1 to 3, the resin composite A is provided with a core material A1 formed of a bead expanded article and the core material A1 is covered with a sheet-like fiber-reinforced resin (FRP) layer A2 containing a resin and a fiber.

A bead expanded article A11 constituting the core material A1 contains expanded particles 100 obtained by secondarily expanding pre-expanded particles containing a blowing agent and is formed by mutual thermal fusion of a plurality of expanded particles 100. In more detail, the bead expanded article A11 is such that a blowing agent is contained in resin particles in a non-expanded state (hereinafter, also referred to as "original particles") to prepare expandable particles, the expandable particles are expanded once to obtain pre-expanded particles, and the pre-expanded particles are subjected to bead expansion.

It is preferable that the original particles are composed of a resin composition containing a polycarbonate-based resin as a main component. In addition to the polycarbonate-based resin, a polyphenylene ether-based resin, a polyether imide-based resin can also be used.

Generally, in a molding die for preparing a bead expanded article, a member referred to as a core vent in which a slit serving as a passage for steam is formed inside a cylinder having a diameter of around 1 cm and a length of a several millimeter is provided in a large number so as to penetrate a wall face of the die, and in a place where it is difficult to provide a core vent, such as a corner part, a drill pore having a diameter of 1 mm or less is provided to secure a passage for steam. For that reason, usually, many fine protrusions due to a resin that has entered the core vent or the drill pore are formed on a surface of the bead expanded article. Further, in the molding die used for the bead expanded article, usually, a lid body for occluding a supply port for pre-expanded particles during molding and a tip part of an eject pin for discharging a bead expanded article after being molded from the molding die constitute a molding surface, so that the surface of the bead expanded article is brought into a state where traces of them remain.

A protrusion on the surface of the bead expanded article is a cause for forming gaps at the interface between the bead expanded article and the fiber-reinforced resin material or for disturbing arrangement of fibers of the fiber-reinforced resin material, and accordingly, it is desired that when the fiber-reinforced resin material is laminated, a pressure is applied to some extent to smooth the surface. However, when the compression strength of the bead expanded article is weak, the bead expanded article yields to the pressure when the fiber-reinforced resin material is laminated, and collapse is generated in the bead expanded article. For that reason, not only the surface of the resin composite does not become smooth, but also a desired resin composite thickness may not be maintained.

The bead expanded article of the present invention has high compression strength, and can withstand the pressure when the bead expanded article is laminated with the fiber-reinforced resin material. As a result, the resin composite can be set at a desired thickness, and the beautifulness of the resin composite surface can be improved.

Herein, it is preferable that a value obtained by dividing a 10% compression stress (MPa) of the bead expanded article measured in accordance with JIS K7220 by a density ($g/cm^3$) of the bead expanded article measured is 9.0 ($MPa \cdot cm^3/g$) or more. When the value is less than 9.0, the compression strength of the bead expanded article is weak, so that the bead expanded article yields to the pressure when the bead expanded article is laminated with the fiber-reinforced resin material. Accordingly, collapse may be generated in the bead expanded article or when the bead expanded article is used as a structural member, the compression strength is insufficient and deformation or destruction may be generated. This value is, for example, 9.0, 9.2, 9.5, 9.7, 10.0, 10.2, 10.5, 10.7, 11.0, 11.2, 11.5, 11.7, 12.0, 13.0, 14.0 or 15.0. This value is more preferably 9.5 or more.

The bead expanded article has a density of 0.2 $g/cm^3$ or less for making the resin composite A exert excellent lightness. It is preferable that the bead expanded article has a density of 0.02 $g/cm^3$ or more for making the resin composite A exert excellent strength. The density is, for example, 0.02 $g/cm^3$, 0.025 $g/cm^3$, 0.03 $g/cm^3$, 0.035 $g/cm^3$, 0.04 $g/cm^3$, 0.08 $g/cm^3$, 0.1 $g/cm^3$, 0.15 $g/cm^3$, 0.2 $g/cm^3$. The density is more preferably 0.025 $g/cm^3$ or more and more preferably 0.03 $g/cm^3$ or more.

In addition, generally, on the surface or in the interior of the bead expanded article A11, a gap A11a are easily formed between adjacent expanded particles 100a. Furthermore, some of gaps A11a are in a state of being opened on the surface of the bead expanded article A11 and a resin from the fiber-reinforced resin material can enter the gaps during formation of the fiber-reinforced resin layer A2. When an opening part is present in the gaps between the expanded particles or on the surface of the bead expanded article, a resin composite as a final resin molded article can be insufficient in resin in the fiber-reinforced resin layer A2 or can cause an increase in unnecessary mass.

Accordingly, it is preferable that the bead expanded article A11 does not have such gaps. The bead expanded article is a bead expanded article densely filled with the expanded particles due to high air permeability resistance and the bead expanded article is densely filled with the expanded particles. This can provide a resin composite having surface appearance without permeating a resin from the fiber-reinforced resin material between the expanded particles in the bead expanded article and without causing insufficient in resin in the fiber-reinforced resin layer A2.

It is preferable that the bead expanded article has a property that the air permeability resistance measured in cut pieces is 30 s or more. When the air permeability resistance is less than 30 s, many gaps are formed between the expanded particles inside the bead expanded article. For that reason, resin may be insufficient in the fiber-reinforced resin layer A2 or an increase in unnecessary mass may be caused. The air permeability resistance is, for example, 30 s, 40 s, 50 s, 60 s, 70 s, 80 s, 90 s, 100 s, 130 s, 150 s, 170 s, 200 s, 220 s, 250 s, 270 s or 300 s. The air permeability resistance is more preferably 40 s or more.

The air permeability resistance is obtained as an average value (average air permeability resistance) of measurements performed at a plurality of places.

Methods of measuring an average air permeability resistance, an average thickness, a 10% compression stress, and a density of the bead expanded article will be described in Examples.

When the thermal fusibility between the expanded particles is low in the bead expanded article, a resin from the fiber-reinforced resin material that has entered through a thin portion of a resin film may enter up to a deeper portion of the relevant bead expanded article along the interface between the expanded particles. Furthermore, when the bead expanded article has a high open cell rate, a resin from the fiber-reinforced resin material that has entered through a broken portion or thin portion of a resin film easily enters the expanded particles in a larger amount. For that reason, it is preferable that the bead expanded article has a high thermal fusion rate and a high closed cell property.

Furthermore, it is preferable that the bead expanded article A11 has a thermal fusion rate (thermal fusion rate between expanded particles) of 50% or more. The thermal fusion rate of the bead expanded article A11 is, for example, 50%, 55%, 60%, 65%, 70%, 75%, 80%, 85%, 90%, 95% or 100%. The thermal fusion rate of the bead expanded article A11 is more preferably 70% or more and further preferably 80% or more.

A method of measuring the thermal fusion rate of the bead expanded article A11 will be described in Examples.

The bead expanded article has an open cell rate of 10% or less for making the resin composite exert excellent strength. The open cell rate of the bead expanded article is, for example, 0%, 1%, 2%, 7% or 10%. The open cell rate of the bead expanded article is usually set to 1% or more.

A method of measuring the open cell rate of the bead expanded article will be described in Examples.

For obtaining the above-mentioned bead expanded article excellent in fusibility between the expanded particles, it is necessary to perform molding using steam at a high pressure during molding of pre-expanded particles. Specifically, in order to obtain the bead expanded article according to the present invention, it is preferable that molding is performed at a steam pressure of 0.8 MPa or higher as expressed by an absolute pressure. Furthermore, when the steam pressure increases too much, the temperature at molding increases too much and the expanded particles are melted, and thus it is difficult to obtain a molded article. Accordingly, it is desirable that molding is performed at a steam pressure of 1.2 MPa or less as expressed by an absolute pressure and it is more preferable that molding is performed at a steam pressure of 1.1 MPa or less. The steam pressure is, for example, 0.8 MPa, 0.85 MPa, 0.9 MPa, 0.95 MPa, 1.0 MPa, 1.05 MPa, 1.1 MPa, 1.15 MPa or 1.2 MPa as expressed by an absolute pressure.

However, when molding is performed under high pressure steam, the pressure in pre-expanded particles yields to the molding vapor pressure and contraction may be caused. When the contraction is caused, gaps are generated between the expanded particles even if a fusion rate is improved, and the bead expanded article may have low air permeability resistance. For that reason, in order to obtain a bead expanded article excellent in fusibility between expanded particles and having high compression strength and high air permeability resistance, it is suitable that the molding vapor pressure is set to 0.8 MPa or more as expressed by an absolute value and at the same time, sufficient expanding power is imparted to the pre-expanded particles.

Specifically, it is suitable that an internal pressure satisfying the following equation is applied to the pre-expanded particles.

internal pressure of cell (Pm) at molding $\geq$ water vapor pressure (Ps) at molding wherein both the Pm and the Ps are an absolute pressure (MPa).

Furthermore, internal pressure of cell (Pm) at molding is calculated by the following equation:

$$Pm = Pf \times (Ts + 273)/293 \times V/Vm$$

wherein, Pf is an internal pressure of cell (MPa) in the pre-expanded particles, Ts is a saturated steam temperature (°C) at the above-mentioned pressure, V is a volume (cm$^3$) of a space in the pre-expanded particles, and Vm is a volume (cm$^3$) of a space in the pre-expanded particles after the pre-expanded particles are secondarily expanded with molding steam and are filled in the mold without gap.

Further, the Pf, Ts, V, and Vm are calculated by the following equations, respectively:

$$Pf = 8.31 \times 293 \times (0.1 \times V/8.31/293 + W/M)/V$$

$$V = 100 \times R/\rho0 - 100/\rho s$$

$$Vm = 100 \times R/\rho0/R - 100/\rho s$$

wherein, W is an internal pressure application amount (% by mass), M is a molecular weight (g) of an internal pressure application gas, R is a filling rate of the pre-expanded particles, $\rho0$ is a bulk density (g/cm$^3$) of the pre-expanded particles, and ps is a resin density (g/cm$^3$). The filling rate R of the pre-expanded particles is set to 0.6.

In addition, Ts is calculated from the value of Ps by the following equation:

$$Ts = 237.3 \times Log (Ps \times 10000/6.1078)/(7.5 - Log (Ps \times 10000/6.1078))$$

The internal pressure application to the pre-expanded particles can be performed by filling a pressurized vessel with the pre-expanded particles after preparation of the pre-expanded particles and filling the vessel with a gas such as air, nitrogen or carbonic acid gas under pressure. Furthermore, the internal pressure application amount W can be calculated by the following equation with measuring the mass of the pre-expanded particles before and after the internal pressure application.

$$W \text{ (\% by mass)} = \text{(pre-expanded particles mass (g) after internal pressure application - pre-expanded particles mass (g) before internal pressure application)/pre-expanded particles mass (g) before internal pressure application} \times 100$$

Furthermore, the bulk density of the pre-expanded particles obtained by dividing the mass of the pre-expanded particles when the pre-expanded particles are weighed in a 1000 cm$^3$ measuring cylinder to around 800 cm$^3$, by a bulk volume of the pre-expanded particles read from the measuring cylinder.

The fiber-reinforced resin layer A2 constituting the resin composite A with the core material A1 including the above-mentioned bead expanded article includes a sheet-like fiber-reinforced resin material containing a resin and a fiber. The fiber-reinforced resin layer A2 is of a two layer-structure that is formed of a first fiber-reinforced resin material A21 and a second fiber-reinforced resin material A22. A ratio of a fiber and a resin, and a kind of a fiber and resin are not necessarily the same, and these may be different from each other between the first fiber-reinforced resin material A21 and the second fiber-reinforced resin material A22.

The fiber contained in the fiber-reinforced resin layer A2 may be in a state of a short fiber or may be in a state of a continuous fiber. When the fiber is a continuous fiber, the fiber can be contained in the fiber-reinforced resin layer A2, in a yarn state of a paralleled yarn or a twisted yarn. The yarn can be contained in the fiber-reinforced resin layer A2 in a form of a woven fabric or a knitted fabric. The woven fabric may be a plain weave fabric, a twill fabric, a satin fabric.

When the fiber is a short fiber, the fiber can be contained in the fiber-reinforced resin layer A2 in a state of a non-woven fabric.

Examples of the fiber include inorganic fibers such as a glass fiber, a carbon fiber, a silicon carbide fiber, an alumina fiber, a Tyranno fiber, a basalt fiber, a stainless fiber, and a steel fiber; organic fibers such as an aramid fiber, a polyethylene fiber, a polyester fiber, and a polyparaphenylene benzoxazole (PBO) fiber; a boron fiber. As the fiber, one kind may be used alone or two or more kinds may be used together.

The resin that constitutes the fiber-reinforced resin layer A2 with the fiber may be a thermoplastic resin or a thermosetting resin. Examples of the thermosetting resin include an epoxy resin, an unsaturated polyester resin, a phenol resin, a melamine resin, a polyurethane resin, a silicone resin, a maleimide resin, a vinylester resin, a cyanic acid ester resin, a resin obtained by pre-polymerizing a maleimide resin and a cyanic acid ester resin. The thermosetting resin is preferably an epoxy resin, a vinylester resin, an unsaturated polyester resin or a cyanic acid ester resin because of excellent heat resistance, impact absorbability, and chemical resistance.

Examples of the thermoplastic resin include an olefin-based resin, a polyester-based resin, a thermoplastic epoxy resin, an amide-based resin, a thermoplastic polyurethane resin, a sulfide-based resin, an acrylic-based resin. The thermoplastic resin is preferably a polyester-based resin, a thermoplastic epoxy resin or a thermoplastic polyurethane resin because of excellent adhesiveness.

Examples of the epoxy resin include a polymer having a linear structure, which is a polymer or a copolymer of epoxy compounds, and a copolymer having a linear structure, which is a copolymer of an epoxy compound and a monomer polymerizable with this epoxy compound. Specific examples of the epoxy resin include a bisphenol A type epoxy resin, a bisphenol fluorene type epoxy resin, a cresol novolak type epoxy resin, a phenol novolak type epoxy resin, a cyclic aliphatic type epoxy resin, a long chain aliphatic type epoxy resin, a glycidyl ester type epoxy resin, a glycidyl amine type epoxy resin. As the epoxy resin, a bisphenol A type epoxy resin and a bisphenol fluorene type epoxy resin are preferable.

The fiber-reinforced resin layer A2 is usually formed to have a thickness of 0.1 mm to 5 mm. The thickness is, for example, 0.1 mm, 0.2 mm, 0.5 mm, 1 mm, 2 mm, 3 mm, 4 mm or 5 mm. Furthermore, the fiber-reinforced resin layer A2 is usually formed so as to contain a fiber at a proportion of 10% by mass or more and 90% by mass or less. The content of the fiber is, for example, 10% by mass, 20% by mass, 30% by mass, 40% by mass, 50% by mass, 60% by mass, 70% by mass, 80% by mass or 90% by mass. For forming the fiber-reinforced resin layer A2, various additives may be used in addition to the above-mentioned resins and fibers.

The resin composite A is prepared, for example, by preparing the bead expanded article that is to be the core material A1 in advance, then sticking the fiber-reinforced resin material so as to cover the surface of the bead expanded article, and further integrating the fiber-reinforced resin material and the bead expanded article with a pressurizing device such as an autoclave under pressure and heating environment.

The bead expanded article is obtained from a resin composition containing a polycarbonate-based resin having an aromatic skeleton as a main component.

The bead expanded article can be prepared by carrying out an expandable particles preparation step of preparing expandable particles by adding a blowing agent to original particles; a pre-expansion step of pre-expanding (primarily expanding) the prepared expandable particles under heating to prepare pre-expanded particles; an internal pressure application step of imparting secondary expanding power by impregnating inside of the pre-expanded particles with a gas; and a molding step of preparing a molded article (bead expanded article) having a shape corresponding to a cavity (molding space) of a molding die by secondarily expanding the pre-expanded particles to which the internal pressure is applied in the molding die.

It is preferable that the polycarbonate-based resin has a polyester structure of carbonic acid and dihydric phenol. From the viewpoint of enhancing heat resistance, the polycarbonate-based resin has an aromatic skeleton. Specific examples of the polycarbonate-based resin include polycarbonate resins derived from bisphenols such as 2,2-bis(4-oxyphenyl)propane, 2,2-bis(4-oxyphenyl)butane, 1,1-bis(4-oxyphenyl)cyclohexane, 1,1-bis(4-oxyphenyl)butane, 1,1-bis(4-oxyphenyl)isobutane, and 1,1-bis(4-oxyphenyl)ethane.

Examples of the polycarbonate-based resin include a linear polycarbonate resin, a branched polycarbonate resin, and both of them may be blended. The polycarbonate-based resin may be a copolymer with acrylic acid ester and it is preferable that a proportion of a component derived from acrylic acid ester is 50% by mass or less.

Furthermore, it is preferable that the polycarbonate-based resin has an MFR of 1 to 20 g/10 min. The resins falling within this range are suitable for expansion and are more easily expanded at a higher expansion ratio. The MFR is, for example, 1 g/10 min, 2 g/10 min, 5 g/10 min, 10 g/10 min, 12 g/10 min, 15 g/10 min or 20 g/10 min. The MFR is more preferably in a range of 2 to 15 g/10 min.

Other additives may be contained in a base resin. Examples of the other additives include other resins, a compatibilizing agent, a plasticizer, a flame retardant, a flame retardant aid, an antistatic agent, a spreading agent, a cell adjusting agent, a filler, a coloring agent, a weathering agent, an aging preventing agent, a lubricant, an anti-fogging agent, a perfume.

Examples of the other resins include a saturated polyester-based resin, an ABS-based resin, a polystyrene-based resin, a polyphenylene oxide-based resin, and the like. It is preferable that a content of the other resins in the base resin is less than 50% by mass.

A shape of a resin particle is not particularly limited. Examples thereof include a spherical shape, a cylindrical shape. Among them, the shape is preferably a spherical shape as much as possible. That is, it is preferable that a ratio of a short diameter D and a long diameter L (L/D) of resin particle is close to 1 as much as possible. It is preferable that L and D are within a range of 0.5 to 10 mm. Furthermore, an average particle diameter preferably falls within a range of 0.5 to 10 mm. L, D, and the average particle diameter are, for example, 0.5 mm, 0.7 mm, 1 mm, 2 mm, 5 mm, 7 mm or 10 mm.

A method of producing resin particles is not particularly limited, and examples thereof include a method of supplying a base resin to an extruder to melt-knead the base resin and granulating the resulting strand by cutting the strand in air, cutting in water, and cutting under heating.

By impregnating the resin particles obtained above with a blowing agent, expandable particles can be obtained.

As the blowing agent to be impregnated into the resin particles, known volatile blowing agent and inorganic blowing agent can be used. Examples of the volatile blowing agent include aliphatic hydrocarbons such as propane, butane, and pentane, aromatic hydrocarbons, alicyclic hydrocarbons, aliphatic alcohols. Examples of the inorganic blowing agent include carbonic acid gas, nitrogen gas, air (atmosphere), inert gas (helium, argon). Two or more kinds of these blowing agents may be used together. Among these blowing agents, an inorganic blowing agent is preferable and a carbonic acid gas is more preferable.

A content (impregnation amount) of the blowing agent is preferably 3 to 15 parts by mass based on 100 parts by mass of the polycarbonate-based resin composition. When the content of the blowing agent is less than 3 parts by mass, the expanding power becomes low and good expansion may be difficult. When the content exceeds 15 parts by mass, the plasticizing effect becomes great and contraction is easily caused at expansion, so that productivity becomes worse and at the same time a desired bulk density may be difficult to be obtained stably. The content of the blowing agent is more preferably 4 to 12 parts by mass.

Examples of the impregnation method include a wet impregnation method of impregnating the blowing agent by injecting the blowing agent while the resin particles are dispersed and stirred in an aqueous system; a dry impregnation method (vapor phase impregnation method) not substantially using water, in which the resin particles are placed in a sealable container and the blowing agent is press-fitted to be impregnated.

Particularly, a dry impregnation method that can perform impregnation without using water is preferable. An impregnation pressure, an impregnation time, and an impregnation temperature when the resin particles are impregnated with the blowing agent by a dry impregnation method are not particularly limited; however, from the viewpoint of effectively performing the impregnation and obtaining further better pre-expanded particles and expanded molded article, it is preferable that the impregnation pressure is 0.5 to 10 MPa (gauge pressure). The impregnation pressure is more preferably 1 to 4.5 MPa (gauge pressure).

The impregnation time is preferably 0.5 to 200 hours. When the impregnation time is shorter than 0.5 hours, an amount of the blowing agent to be impregnated into the resin particles is reduced, so that it may be difficult to obtain sufficient expanding power. When the impregnation time is longer than 200 hours, productivity may be reduced. The impregnation time is more preferably 1 to 100 hours.

Furthermore, the impregnation temperature is preferably 0 to 60°C. When the impregnation temperature is lower than 0°C, the solubility of the blowing agent in resin is increased and the blowing agent is impregnated at a necessary amount or more. Furthermore, the diffusibility of the blowing agent in resin is reduced. Hence, it may be difficult to obtain sufficient expanding power (primary expanding power) within a desired time. When the impregnation temperature is higher than 60°C, the solubility of the blowing agent in resin is reduced, and the impregnation amount of the blowing agent is reduced. Furthermore, the diffusibility of the blowing agent in resin is increased. Hence, it may be difficult to obtain sufficient expanding power (primary expanding power) within a desired time. The impregnation temperature is more preferably 5 to 50°C.

A surface treating agent such as a binding preventing agent, an antistatic agent or a spreading agent may be added to the expandable particles.

The binding preventing agent (coalescence preventing agent) plays a role of preventing coalescence of the pre-expanded particles in the pre-expansion step. Herein, the coalescence refers to the combination and integration of a plurality of expanded particles. Examples of the binding preventing agent include inorganic powder such as talc, calcium carbonate, and aluminum hydroxide, and organic powder such as fatty acid metal salts and fatty acid esters including zinc stearate, magnesium stearate, and ethylenebisstearic acid amide. An addition amount of the binding preventing agent is preferably 0.01 to 1.0 part by mass based on 100 parts by mass of the expandable particles.

Examples of the antistatic agent include polyoxyethylene alkyl phenol ether, stearic acid monoglycerides.

Examples of the spreading agent include polybutene, polyethylene glycol, silicone oil.

As a method of expanding the expandable particles to obtain the pre-expanded particles, there is a method of expanding the expandable particles by heating with hot blast, a heat medium such as oil, steam (water steam). In order to stably produce the pre-expanded particles, steam is preferable.

It is preferable that a hermetic pressure-resistant expansion container is used in an expanding machine at pre-expansion. Furthermore, a steam pressure is preferably 0.10 to 0.80 MPa (gauge pressure) and more preferably 0.20 to 0.45 MPa (gauge pressure). An expansion time may be a time necessary for obtaining a desired bulk density. The expansion time is preferably 3 to 180 seconds. When the expansion time exceeds 180 seconds, contraction of the pre-expanded particles may start and a bead expanded article having good physical properties may not be obtained from such pre-expanded particles.

The coalescence preventing agent may be removed before molding. As a removal method, washing can be performed using water or an acidic aqueous solution such as hydrochloric acid.

The pre-expanded particles are filled in a pressure vessel and a blowing agent is injected to the pressure vessel to perform internal pressure application in such a manner that a predetermined internal pressure application amount meeting the molding vapor pressure is obtained so as to satisfy the above-mentioned equation.

As the blowing agent used in the internal pressure application, the blowing agents during production of the pre-expanded particles can be used. Among them, it is preferable to use an inorganic blowing agent. Particularly, it is preferable to use one from nitrogen gas, air, and carbonic acid gas or use two or more from them together.

The pressure for applying an internal pressure is desirably in such a range that a necessary internal pressure application amount can be obtained; however, when the pressure is high, the pre-expanded particles may be collapsed. In such a case, collapse of the pre-expanded particles can be suppressed by stepwisely increasing the pressure, equalizing the pressure in the pre-expanded particles and the pressure in the pressure vessel, and then increasing the pressure gradually. Specifically, the internal pressure application can be performed at a pressure of 0.1 to 4 MPa (gauge pressure).

In addition, detailed description is not repeated more herein, but the bead expanded article and resin composite of the present invention are not limited by the above-mentioned exemplification at all.

EXAMPLES

The present invention will be specifically described below by way of Examples, but the present invention is not limited to them. First, methods of measuring various physical properties in Examples will be described below.

(Bulk Density of Pre-Expanded Particles)

A 1000 cm$^3$ measuring cylinder was filled with about 800 cm$^3$ pre-expanded particles, the measuring cylinder was vibrated a several times to density the filling, an upper part of the filled pre-expanded particles was slightly pressed to be flatted, then the measuring cylinder was seen visually from the horizontal direction to read a bulk volume, and the bulk volume was represented by Vb (cm$^3$). Then, a mass of the pre-expanded particles filled in the measuring cylinder was weighed in significant figures to second place after the decimal point and the mass was expressed by W (g). A bulk density of the pre-expanded particles was obtained by the following equation:

$$\text{Bulk density (g/cm}^3) = W/Vb$$

A bulk factor was defined as a value obtained by multiplying the reverse of the bulk density by the density (g/cm$^3$) of a polycarbonate-based resin.

The density of a polycarbonate-based resin was measured by a method defined in JIS K7112:1999.

(Average Air permeability resistance and Average Thickness of Bead Expanded Article)

An air permeability resistance was measured in accordance with JIS P8117: 2009. First, a bead expanded article was sliced at a thickness of 0.9 mm or more and 1.2 mm or less using a splitting machine (for example, "AB-320D" manufactured by Fortuna) to prepare a sample. The sample was adjusted to a size of 50 mm × 50 mm and at least 10 samples were collected from the bead expanded article. The sample was set in a Gurley tester B type and the air permeability resistance was measured. At that time, when a numerical value of the air permeability resistance exceeded 600 s, 600 s was adopted. A sample thickness in the central part of the place where the air permeability resistance had been measured was measured, for example, with "Thickness Gauge 547 type" manufactured by Mitutoyo Corporation. Similarly, the air permeability resistance and sample thickness were measured for each of the total of 10 samples, and the results were arithmetically averaged to obtain an average air permeability resistance (s) and an average thickness (mm).

(10% Compression Stress of Bead Expanded Article)

A 10% compression stress was measured in accordance with JIS K7220: 2006. First, three test pieces each with a length of 50 mm, a width of 50 mm, and a thickness of 25 mm were collected from a bead expanded article in a state where a surface layer part of the bead expanded article was removed, and were allowed to stand for 24 hours or longer under environment of 23 ± 2°C and RH50 ± 5%. A dimension of the test piece was measured, for example, with "Digimatic Caliper" manufactured by Mitutoyo Corporation and a mass was measured, for example, with "upper tray electronic balance FZ-300i" manufactured by A&D Company, Limited. A 10% compression stress (MPa) was measured for each of the test pieces using a "Tensilon UCT-10T" universal tester manufactured by ORIENTEC Co., LTD. and "UTPS-458X" universal tester data processing apparatus manufactured by SOFTBRAIN Co., Ltd., with a testing rate being 2.5 mm/min and a displacement origin being a turning point. The average value of the results was adopted as 10% compression stress. Furthermore, the density ($g/cm^3$) of the test piece was defined as an average value of a value calculated from the dimension and mass of each test piece.

(Fusion Rate of Bead Expanded Article)

A cut line with a depth of about 2 mm was formed on the surface of the bead expanded article with a cutter knife and then the bead expanded article was divided into two along this cut line. For expanded particles at the fracture surface of the bead expanded article, the number (a) of particles that were fractured in the expanded particles and the number (b) of particles that were fractured at the interface between the expanded particles were counted within an arbitrary range of 100 to 150 particles, and a value obtained by substitution into the equation $[(a)/((a) + (b))] \times 100$ was adopted as a fusion rate (%). In addition, a sample for measuring a fusion rate was fundamentally a flat plate-shaped sample and had a thickness of around 30 mm, a width of around 300 mm, and a length of around 400 mm. The cut line was formed so as to cross the central part in the length direction of the measurement sample toward the width direction. When such a measurement sample could not be collected from the bead expanded article, a fusion rate was obtained using a sample having such a size that the sample can be collected from the bead expanded article.

(Density of Bead Expanded Article)

The measurement of a density (apparent density) of the bead expanded article was performed in accordance with JIS K7222: 2005 "Cellular plastics and rubbers - Determination of apparent (bulk) density".

Additionally, an expansion ratio was obtained by dividing a density (resin density) of a resin composition constituting the bead expanded article in a non-expanded state by an apparent density of the bead expanded article. The resin density was obtained by preparing a sample in a non-expanded state by thermally pressing the bead expanded article and measuring a density of the sample. The measurement at this time was according to an underwater substitution method of JIS K7112: 1999 "Plastics - Methods of determining the density and relative density of non-cellular plastics".

(Open Cell Rate of Bead Expanded Article)

A test piece used in measurement was cut out from the bead expanded article without leaving the skin, and further the surface of the cut section was finished with a bread slicer "FK-4N" manufactured by FUJISHIMA KOKI CO., LTD. to obtain a cubic shape with 25 mm × 25 mm × 25 mm. Five test pieces were prepared. An open cell rate of the test piece was obtained by conditioning a state of the test piece for 16 hours under environment of JIS K7100-1999 Symbol 23/50, 2-Class, and then measuring an apparent volume ($cm^3$) and at the same time measuring a volume with an air-comparison pycnometer under the same environment. The apparent volume was obtained by measuring an external dimension with an accuracy of 1/100 mm using "Digimatic Caliper" manufactured by Mitutoyo Corporation. Then, using an air-comparison pycnometer 1000 type (manufactured by Tokyo Science Co., Ltd.), a volume ($cm^3$) of the measurement sample was obtained by a 1-1/2-1 atom method, an open cell rate (%) was calculated by the following equation, and an average value of open cell rates of the five test pieces was obtained. In addition, as the air-comparison pycnometer, one calibrated with a standard sphere (large 28.96 $cm^3$, small 8.58 $cm^3$) was used.

$$\text{Open cell rate } (\%) = 100 \times (\text{apparent volume - volume measured with air-comparison pycnometer})/\text{apparent volume}$$

(Surface Appearance of Resin Composite)

A surface of a resin composite was observed visually and the surface appearance was evaluated by the case where a few depressions are generated between the expanded particles is defined as ○, the case where many depressions are generated is defined as ×, and the case where the intermediate number of depressions are generated is defined as △.

Example 1

2 kg of a polycarbonate resin (LEXAN (registered trademark) 153, SABIC Innovative Plastics) that had been pelletized into a size of a diameter φ of 1.0 mm and a length of 1.1 mm using an extruder was accommodated in a 10 L pressure resistant vessel.

A carbonic acid gas was injected into the pressure resistant vessel and allowed to stand for 24 hours under environment at 20°C in a state of being pressurized up to a pressure of 2.8 MPa (gauge pressure), and the pellets was impregnated with the carbonic acid gas to obtain expandable particles.

Then, after the interior of the pressure vessel was depressurized, the expandable particles were taken out, 0.5 parts by mass of calcium carbonate as a coalescence preventing agent was dry-blended, then the expandable particles were heated with high pressure steam of 0.34 MPa (gauge pressure) for about 13 seconds to thereby pre-expand the expandable particles. At this time, the amount of the carbonic acid gas impregnated into the expandable particles immediately after the expandable particles were taken out from the pressure vessel was 6.6% by mass, and the bulk density of the pre-expanded particles was 0.15 $g/cm^3$.

Then, calcium carbonate attached to the surface of the resulting pre-expanded particles was removed by washing with dilute hydrochloric acid, followed by drying. Thereafter, about 700 g of the pre-expanded particles were accommodated in a 10 L pressure resistant vessel and nitrogen gas was filled under pressure up to 1.5 MPa (gauge pressure). This was allowed to stand as it was at room temperature for 24 hours and an internal pressure was applied into the pre-expanded particles.

Then, the interior of the pressure resistant vessel was depressurized. After the depressurization, the above-mentioned pre-expanded particles to which internal pressure was applied in the pressure resistant vessel were taken out. Using a high pressure molding machine provided with a molding die having 300 mm × 400 mm × 30 mm, a mold was filled with the pre-expanded particles in a state where mold cracking was secured by 3 mm, and then high pressure steam of 0.3 MPa (gauge pressure) was introduced to the mold for 3 seconds to discharge air. Thereafter, high pressure steam of 0.8 MPa (gauge pressure) was introduced for 20 seconds and molding was performed to obtain a bead expanded article. At this time, the internal pressure application amount was 5% by mass. The thickness of the resulting bead expanded article was 29.94 mm. The thickness of the bead expanded article was defined as an average value of thicknesses obtained by five points measurement avoiding irregularities such as a steam slit trace formed on the surface of the resulting bead expanded article, using "Digimatic Caliper" manufactured by Mitutoyo Corporation.

Furthermore, pressure in cells (Pm) at molding = 1.22 MPa > molding vapor pressure (Ps) = 0.9 MPa (absolute pressure) was satisfied.

Then, after the resulting bead expanded article was dried for 24 hours in an oven at 60°C, the air permeability resistance was measured. As a result, the average air permeability resistance was 69.72 s. The average thickness of the samples was 1.04 mm. The value obtained by dividing the 10% compression stress by the density was 9.89 ($MPa \cdot cm^3/g$).

Example 2

Using pre-expanded particles to which internal pressure was applied in the same manner as in Example 1 and using a high pressure molding machine provided with a molding die having 300 mm × 400 mm × 30 mm in the same manner as in Example 1, a mold was filled with the pre-expanded particles in a state where mold cracking was secured by 3 mm, and then high pressure steam of 0.3 MPa (gauge pressure) was introduced to the mold for 3 seconds to discharge air. Thereafter, high pressure steam of 0.9 MPa (gauge pressure) was introduced for 20 seconds and molding was performed to obtain a bead expanded article.

Pressure in cells (Pm) at molding at this time = 1.23 MPa > molding vapor pressure (Ps) = 1.0 MPa (absolute pressure) was satisfied.

Furthermore, the thickness of the bead expanded article measured in the same manner as in Example 1 was 29.96 mm. Then, after the resulting bead expanded article was dried for 24 hours in an oven at 60°C, the air permeability resistance measured and as a result, the average air permeability resistance was 50.45 s. The average thickness of the samples was 0.95 mm. The value obtained by dividing the 10% compression stress by the density was 9.72 (MPa·cm$^3$/g).

Example 3

2 kg of pellets that had been prepared in the same manner as in Example 1 except that the polycarbonate resin was changed to (PANLITE (registered trademark) Z2601, TEIJIN LIMITED) were accommodated in a 5 L pressure resistant vessel.

A carbonic acid gas was injected into the pressure resistant vessel and allowed to stand for 48 hours under environment at 20°C in a state of being pressurized up to a pressure of 4.2 MPa (gauge pressure), and the pellets was impregnated with the carbonic acid gas to obtain expandable particles.

Then, after the interior of the pressure vessel was depressurized, the expandable particles were taken out, 0.5 parts by mass of calcium carbonate as a coalescence preventing agent was dry-blended, then the expandable particles were heated with high pressure steam of 0.34 MPa (gauge pressure) for about 10 seconds to thereby pre-expand the expandable particles. At this time, the amount of the carbonic acid gas impregnated into the expandable particles immediately after the expandable particles were taken out from the pressure vessel was 7.5% by mass, and the bulk density of the pre-expanded particles was 0.17 g/cm$^3$.

Then, calcium carbonate attached to the surface of the resulting pre-expanded particles was removed by washing with dilute hydrochloric acid, followed by drying. Thereafter, about 700 g of the pre-expanded particles were accommodated in a 10 L pressure resistant vessel and nitrogen gas was filled under pressure up to 1.5 MPa (gauge pressure). This was allowed to stand as it was at room temperature for 24 hours and an internal pressure was applied into the pre-expanded particles.

After the interior of the pressure resistant vessel was depressurized, the pre-expanded particles to which internal pressure was applied were taken out. Using a high pressure molding machine provided with a molding die having 300 mm ×400 mm ×30 mm, a mold was filled with the pre-expanded particles in a state where mold cracking was secured by 3 mm, and then high pressure steam of 0.3 MPa (gauge pressure) was introduced to the mold for 3 seconds to discharge air. Thereafter, high pressure steam of 0.9 MPa (gauge pressure) was introduced for 20 seconds and molding was performed to obtain a bead expanded article. At this time, the internal pressure application amount was 4.1% by mass. Furthermore, the thickness of the resulting bead expanded article was 29.95 mm.

Furthermore, pressure in cells (Pm) at molding = 1.18 MPa > molding vapor pressure (Ps) = 1.0 MPa (absolute pressure) was satisfied.

Then, after the resulting bead expanded article was dried for 24 hours in an oven at 60°C, the air permeability resistance was measured and as a result, the average air permeability resistance was 260.3 s. The average thickness of the samples was 1.04 mm. The value obtained by dividing the 10% compression stress by the density was 11.36 (MPa·cm$^3$/g).

Example 4

A plate-like sample having a thickness of 26 mm and a size of 100 mm × 100 mm was cut out from the bead expanded article of Example 1 and was used as a core material. Four carbon FRP prepregs that had been cut into 100 mm × 100 mm in the same manner were prepared and two of them were overlapped on an upper surface side of the core material so that peripheral edges were aligned. The remaining two were arranged on a lower surface side of the core material in the same manner to prepare a pre-molded article. This pre-molded article was pressurized while being heated with an autoclave, to prepare a resin composite in which a fiber-reinforced resin layer was formed on upper and lower surfaces of the core material. The resin composite had neither resin depletion nor collapse of the bead expanded article, and its surface state was good (conditions described later). The thickness of the resin composite was measured and as a result, the remaining proportion of the core material thickness after the preparation of the resin composite was 89.2% as compared with the original core material thickness. In addition, the thickness of the resin composite was obtained by sandwiching both surfaces with smooth metal plates each having 200 mm × 200 mm and measuring a chink between the metal plates. The chink between the metal plates was measured at the central parts of four sides of the resin composite at an accuracy of 1/100 mm, using "Digimatic Caliper" manufactured by Mitutoyo Corporation, and the arithmetic average of the chinks of the four sides was used as the thickness of the composite. Further, the thickness of the fiber-reinforced resin layer was set to 1.00 mm, a value obtained by subtracting 1.00 mm from the thickness of the resin composite was defined as the thickness of the core material after preparation of the resin composite, and the thickness of the core material was divided by the original thickness of the core material to obtain the remaining proportion of the core material thickness.

Example 5

The bead expanded article of Example 2 was cut into a size of 150 mm × 150 mm while leaving its thickness unchanged, to obtain a core material. Four carbon FRP prepregs that had been cut into 150 mm × 150 mm in the same manner were prepared and two of them were overlapped on an upper surface side of the core material so that peripheral edges were aligned.
The remaining two were arranged on a lower surface side of the core material in the same manner to prepare a pre-molded article. This pre-molded article was pressurized while being heated with an autoclave, to prepare a resin composite in which a fiber-reinforced resin layer was formed on upper and lower surfaces of the core material. The resin composite had neither resin depletion nor collapse of the bead expanded article, and its surface state was good (conditions described later). The thickness of the resin composite was measured in the same manner as in Example 4 and the remaining proportion of the core material thickness after the preparation of the resin composite was 98.5%.

Example 6

The bead expanded article of Example 3 was cut into a size of 100 mm × 100 mm while leaving its thickness unchanged, to obtain a core material. Four carbon FRP prepregs that had been cut into 100 mm × 100 mm in the same manner were prepared and two of them were overlapped on an upper surface side of the core material so that peripheral edges were aligned. The remaining two were arranged on a lower surface side of the core material in the same manner to prepare a pre-molded article. This pre-molded article was pressurized while being heated with an autoclave, to prepare a resin composite in which a fiber-reinforced resin layer was formed on upper and lower surfaces of the core material. The resin composite had neither resin depletion nor collapse of the bead expanded article, and its surface state was good (conditions described later). The thickness of the resin composite was measured in the same manner as in Example 4 and the remaining proportion of the core material thickness after the preparation of the resin composite was 99.1%.

Example 7

After pellets that had been prepared in the same manner as in Example 1 except that the polycarbonate resin was changed to (PANLITE (registered trademark) L1250Y, TEIJIN LIMITED) was impregnated with a carbonic acid gas, and then the pellets were pre-expanded to obtain pre-expanded particles. The amount of the carbonic acid gas impregnated was 7.3% by mass and pre-expansion conditions were 0.34 MPa (gauge pressure) and heating for 11 seconds. The bulk density of the pre-expanded particles was 0.15 g/cm$^3$.
Then, an internal pressure was applied to the resulting pre-expanded particles with nitrogen gas in the same manner as in Example 1. Then, the interior of the pressure resistant vessel was depressurized. After the depressurization, the above-mentioned pre-expanded particles to which internal pressure was applied in the pressure resistant vessel were taken out. Using a high pressure molding machine provided with a molding die having 300 mm × 400 mm × 30 mm, a mold was filled with the pre-expanded particles in a state where mold cracking was secured by 3 mm, and then high pressure steam of 0.3 MPa (gauge pressure) was introduced to the mold for 3 seconds to discharge air. Thereafter, high pressure steam of 0.9 MPa (gauge pressure) was introduced for 30 seconds and molding was performed to obtain a bead expanded article. At this time, the internal pressure application amount was 4.5% by mass. The thickness of the resulting bead expanded article was 29.96 mm.
Furthermore, pressure in cells (Pm) at molding = 1.28 MPa > molding vapor pressure (Ps) = 1.0 MPa (absolute pressure) was satisfied.
Then, after the resulting bead expanded article was dried for 24 hours in an oven at 60°C, the air permeability resistance was measured and as a result, the average air permeability resistance was 80.9 s. The average thickness of the samples was 1.05 mm.

Example 8

The bead expanded article of Example 7 was cut into a size of 100 mm × 100 mm while leaving its thickness unchanged, to obtain a core material. Four carbon FRP prepregs that had been cut into 100 mm × 100 mm in the same manner were prepared and two of them were overlapped on an upper surface side of the core material so that peripheral edges were aligned. The remaining two were arranged on a lower surface side of the core material in the same manner to prepare a pre-molded article. This pre-molded article was pressurized while being heated with an autoclave, to prepare a resin composite in which a fiber-reinforced resin layer was formed on upper and lower surfaces of the core material. The resin composite had neither resin depletion nor collapse of the bead expanded article, and its surface state was good (conditions described later). The thickness of the resin composite was measured in the same manner as in Example 4 and the remaining proportion of the core material thickness after the preparation of the resin composite was 98.4%.

<Resin Composite Molding Conditions for Examples 4 to 6 and 8>

Heating conditions: 90°C/20 min, 130°C/60 min.

Pressurizing conditions: 0.3 MPa (+ sample was in a vacuum state)

Prepreg: Cross Prepreg TR3523 381 GMX (manufactured by Mitsubishi Rayon Co., Ltd.) Constitution of pre-molded article: Prepreg 2ply/core material/prepreg 2ply

Comparative Example 1

2 kg of a carbonate resin (LEXAN (registered trademark) 153, SABIC Innovative Plastics) that had been pelletized into a size of a diameter $\varphi$ of 1.0 mm and a length of 1.1 mm using an extruder was accommodated in a 10 L pressure resistant vessel. A carbonic acid gas was injected into the pressure resistant vessel and allowed to stand for 24 hours under environment at 20°C in a state of being pressurized up to a pressure of 2.5 MPa (gauge pressure), and the pellets was impregnated with the carbonic acid gas to obtain expandable particles. Then, after the interior of the pressure vessel was depressurized, the expandable particles were taken out, 0.5 parts by mass of calcium carbonate as a coalescence preventing agent was dry-blended, then the expandable particles were heated with high pressure steam of 0.34 MPa (gauge pressure) for about 10 seconds to thereby pre-expand the expandable particles. At this time, the amount of the carbonic acid gas impregnated into the expandable particles immediately after the expandable particles were taken out from the pressure vessel was 7.5% by mass, and the bulk density of the pre-expanded particles was 0.14 g/cm$^3$. Then, calcium carbonate attached to the surface of the resulting pre-expanded particles was removed by washing with dilute hydrochloric acid, followed by drying. Thereafter, about 700 g of the pre-expanded particles were accommodated in a 10 L pressure resistant vessel and nitrogen gas was filled under pressure up to 1.5 MPa (gauge pressure). This was allowed to stand as it was at room temperature for 24 hours and an internal pressure was applied into the pre-expanded particles.

After the interior of the pressure resistant vessel was depressurized, the pre-expanded particles to which internal pressure was applied were taken out. Using a high pressure expanding machine provided with a molding die having 300 mm × 400 mm × 30 mm, a mold was filled with the pre-expanded particles in a state where mold cracking was secured by 3 mm, and then high pressure steam of 0.3 MPa (gauge pressure) was introduced to the mold for 3 seconds to discharge air. Thereafter, high pressure steam of 0.4 MPa (gauge pressure) was introduced for 20 seconds and molding was performed to obtain a bead expanded article. At this time, the internal pressure application amount was 5% by mass.

Furthermore, pressure in cells (Pm) at molding = 1.08 MPa > molding vapor pressure (Ps) = 0.5 MPa (absolute pressure) was satisfied.

Furthermore, the thickness of the bead expanded article measured in the same manner as in Example 1 was 29.96 mm. Then, after the resulting bead expanded article was dried for 24 hours in an oven at 60°C, the air permeability resistance was measured and as a result, the average air permeability resistance was 0.82 s. The average thickness of the samples was 1.06 mm. The value obtained by dividing the 10% compression stress by the density was 8.94 (MPa·cm$^3$/g).

Comparative Example 2

2 kg of a carbonate resin (LEXAN (registered trademark) 153, SABIC Innovative Plastics) that had been pelletized into a size of a diameter $\varphi$ of 1.0 mm and a length of 1.1 mm using an extruder was accommodated in a 10 L pressure resistant vessel. A carbonic acid gas was injected into the pressure resistant vessel and allowed to stand for 24 hours under environment at 20°C in a state of being pressurized up to a pressure of 4.0 MPa (gauge pressure), and the pellets was impregnated with the carbonic acid gas to obtain expandable particles. Then, after the interior of the pressure vessel was depressurized, the expandable particles were taken out, 0.5 parts by mass of calcium carbonate as a coalescence preventing agent was dry-blended, then the expandable particles were heated with high pressure steam of 0.34 MPa (gauge pressure) for about 8 seconds to thereby pre-expand the expandable particles. At this time, the amount of the carbonic acid gas impregnated into the expandable particles immediately after the expandable particles were taken out from the pressure vessel was 7.7% by mass, and the bulk density of the pre-expanded particles was 0.15 g/cm$^3$. Then, calcium carbonate attached to the surface of the resulting pre-expanded particles was removed by washing with dilute hydrochloric acid, followed by drying. Thereafter, about 700 g of the pre-expanded particles were accommodated in a 10 L pressure resistant vessel and nitrogen gas was filled under pressure up to 0.8 MPa (gauge pressure). This was allowed to stand as it was at room temperature for 24 hours and an internal pressure was applied into the pre-expanded particles. After the interior of the pressure resistant vessel was depressurized, the pre-expanded particles to which internal pressure was applied were taken out. Using a high pressure expanding machine provided with a molding die having 300 mm × 400 mm × 30 mm, a mold was filled with the pre-expanded particles in a state where mold cracking was secured by 3 mm, and then high pressure steam of 0.3 MPa (gauge pressure) was introduced to the mold for 3 seconds to discharge air. Thereafter, high pressure steam of 0.7 MPa (gauge pressure) was introduced for 20 seconds and molding was performed to obtain a bead expanded article. At this time, the internal pressure application amount was 2.6% by mass.

Furthermore, pressure in cells (Pm) at molding = 0.76 MPa < molding vapor pressure (Ps) = 0.8 MPa (absolute pressure) was satisfied.

Furthermore, the thickness of the bead expanded article measured in the same manner as in Example 1 was 29.98 mm. Then, after the resulting bead expanded article was dried for 24 hours in an oven at 60°C, the air permeability resistance was measured and as a result, the average air permeability resistance was 20.79 s. The average thickness of the samples was 1.11 mm. The value obtained by dividing the 10% compression stress by the density was 8.21 (MPa·cm$^3$/g).

Comparative Example 3

Using pre-expanded particles to which internal pressure was applied in the same manner as in Comparative Example 2 and using a high pressure molding machine provided with a molding die having 300 mm ×400 mm ×30 mm in the same manner as in Example 1, a mold was filled with the pre-expanded particles in a state where mold cracking was secured by 3 mm, and then high pressure steam of 0.3 MPa (gauge pressure) was introduced to the mold for 3 seconds to discharge air. Thereafter, high pressure steam of 0.9 MPa (gauge pressure) was introduced for 20 seconds and molding was performed to obtain a bead expanded article.

Pressure in cells (Pm) at molding at this time = 0.78 MPa < molding vapor pressure (Ps) = 1.0 MPa (absolute pressure) was satisfied.

Furthermore, the thickness of the bead expanded article measured in the same manner as in Example 1 was 29.96 mm. Then, after the resulting bead expanded article was dried for 24 hours in an oven at 60°C, the air permeability resistance measured and as a result, the average air permeability resistance 8.45 s. The average thickness of the samples was 1.10 mm. The value obtained by dividing the 10% compression stress by the density was 8.13 (MPa·cm$^3$/g).

Comparative Example 4

A resin composite was prepared in the same manner as in Example 4 except that the bead expanded article of Comparative Example 1 was cut into a size of 100 mm × 100 mm while leaving its thickness unchanged, to obtain a core material; however, the core material yielded to the pressure during lamination and collapsed, so that a good resin composite was not obtained. Furthermore, the remaining proportion of the core material thickness after the preparation of the resin composite, which was measured in the same manner as in Example 4, was 77.4%.

Comparative Example 5

A resin composite was prepared in the same manner as in Example 4 except that the bead expanded article of Comparative Example 2 was cut into a size of 150 mm × 150 mm while leaving its thickness unchanged, to obtain a core material; however, the core material yielded to the pressure during lamination and collapsed, so that a good resin composite was not obtained. Furthermore, the remaining proportion of the core material thickness after the preparation of the resin composite, which was measured in the same manner as in Example 4, was 81.8%.

Comparative Example 6

A resin composite was prepared in the same manner as in Example 4 except that the bead expanded article of Comparative Example 3 was cut into a size of 150 mm × 150 mm while leaving its thickness unchanged, to obtain a core material; however, the core material yielded to the pressure during lamination and collapsed, so that a good resin composite was not obtained. Furthermore, the remaining proportion of the core material thickness after the preparation of the resin composite, which was measured in the same manner as in Example 4, was 75.1%.

Table 1 shows the various physical properties of Examples 1 to 3 and 7 and Comparative Examples 1 to 3, and Table 2 shows the various physical properties of Examples 4 to 6 and 8 and Comparative Examples 4 to 6.

[Table 1]

| | | Bulk density of pre-expanded particles (g/cm³) | Molding conditions | | | | Bead expanded article | | | | | |
|---|---|---|---|---|---|---|---|---|---|---|---|---|
| | | | Internal pressure application amount (% by mass) | Kind of internal pressure application gas | Vapor pressure (absolute pressure) (MPa) | Pressure in cells (absolute pressure) (MPa) | Density (g/cm³) | Fusion rate (%) | Open cell rate (%) | Thickness (mm) | Average air permeability resistance (s) | 10% compression stress/density (MPa)/(g/cm³) |
| Example | 1 | 0.15 | 5 | N₂ | 0.9 | 1.22 | 0.15 | 95 | 7.2 | 29.94 | 69.72 | 9.89 |
| | 2 | 0.15 | 5 | N₂ | 1.0 | 1.23 | 0.14 | 98 | 5.7 | 29.96 | 50.45 | 9.72 |
| | 3 | 0.17 | 4.1 | N₂ | 1.0 | 1.18 | 0.16 | 98 | 3.6 | 29.95 | 260.3 | 11.36 |
| | 7 | 0.15 | 4.5 | N₂ | 1.0 | 1.28 | 0.14 | 95 | 9.4 | 29.96 | 80.9 | 9.73 |
| Comparative Example | 1 | 0.14 | 5 | N₂ | 0.5 | 1.08 | 0.15 | 0 | 39.7 | 29.96 | 0.82 | 8.94 |
| | 2 | 0.15 | 2.6 | N₂ | 0.8 | 0.76 | 0.14 | 60 | 28.3 | 29.98 | 20.79 | 8.21 |
| | 3 | 0.15 | 2.6 | N₂ | 1.0 | 0.78 | 0.14 | 70 | 61.8 | 29.96 | 8.45 | 8.13 |

[Table 2]

| | Core material original thickness (mm) | Remaining proportion of core material thickness (%) | Surface appearance |
|---|---|---|---|
| Example 4 | 26.02 | 89.2 | ○ |
| Example 5 | 29.96 | 98.5 | ○ |
| Example 6 | 29.95 | 99.1 | ○ |
| Example 8 | 29.96 | 98.4 | ○ |
| Comparative Example 4 | 29.96 | 77.4 | × |
| Comparative Example 5 | 29.98 | 81.8 | △ |
| Comparative Example 6 | 29.96 | 75.1 | △ |

From Tables 1 and 2 described above, it is understood that a resin composite that is excellent in strength and lightness, and has good appearance is obtained according to the present invention.

DESCRIPTION OF THE REFERENCE NUMERALS

A        Resin composite
A1       Core material
A2       Fiber-reinforced resin layer
A21      First fiber-reinforced resin layer
A22      Second fiber-reinforced resin layer
A11      Bead expanded article
100      Expanded particles
100a     Expanded particles
A11a     Gap
Aa       Recessed part

**Claims**

1.  A bead expanded article comprising a plurality of expanded particles, wherein

    said bead expanded article contains a thermoplastic resin composition containing a polycarbonate-based resin having an aromatic skeleton as a main component, and
    said bead expanded article has properties that a value obtained by dividing a 10% compression stress (MPa) of said bead expanded article by a density (g/cm$^3$) is 9.0 (MPa·cm$^3$/g) or more, an open cell rate of said bead expanded article is 10% or less and a density of said bead expanded article is 0.2 g/cm$^3$ or less, the 10% compression stress, the density, and the open cell rate of said bead expanded article being determined as described in the sections (10% Compression Stress of Bead Expanded Article), (Density of Bead Expanded Article), and (Open Cell Rate of Bead Expanded Article) of the description, respectively.

2.  The bead expanded article according to claim 1, wherein said bead expanded article has a property that an average air permeability resistance measured from a piece cut from said bead expanded article by a method as described in the section (Average Air Permeability Resistance and Average Thickness of Bead Expanded Article) of the description is 30 s or more.

3.  The bead expanded article according to claim 1, wherein said bead expanded article has a fusion rate determined by a method as described in the section (Fusion Rate of Bead Expanded Article) of the description of 50% or more.

4. Use of the bead expanded article defined to claim 1 for the formation of a resin composite, wherein the bead expanded article is used as a core material, and a fiber-reinforced resin layer covers said core material.

5. A resin composite comprising a bead expanded article as a core material and a fiber-reinforced resin layer covering said core material, wherein said core material is the bead expanded article according to claim 1.

6. A method for producing a bead expanded article, comprising steps of:

impregnating a thermoplastic resin composition containing a polycarbonate-based resin having an aromatic skeleton
as a main component with a blowing agent to prepare expandable particles
preparing pre-expanded particles by heating said expandable particles;
applying an internal pressure for imparting secondary expanding power to said pre-expanded particles; and
filling a mold with said pre-expanded particles to which the internal pressure is applied and introducing steam to said mold to secondarily expand said pre-expanded particles to which the internal pressure is applied, to obtain a bead expanded article,
wherein
said steam is introduced into the mold at a pressure of 0.8 MPa (absolute pressure) or more,
the internal pressure is applied to said pre-expanded particles so as to satisfy an equation below:
internal pressure of cell at molding (Pm, absolute pressure: MPa) $\geq$ water vapor pressure at molding (Ps, absolute pressure: MPa),
said Pm is calculated by an equation below:

$$Pm = Pf \times (Ts + 273)/293 \times V/Vm$$

(wherein, Pf is an internal pressure of cell (MPa) in the pre-expanded particles, Ts is a saturated steam temperature ($°C$) at a steam pressure, V is a volume ($cm^3$) of a space in the pre-expanded particles, and Vm is a volume ($cm^3$) of a space in the pre-expanded particles after the pre-expanded particles are secondarily expanded with steam and are filled in the mold without gap),
said Pf, V and Vm are calculated by equations below:

$$Pf = 8.31 \times 293 \times (0.1 \times V/8.31/293 + W/M)/V$$

$$V = 60/\rho 0 - 100/\rho s$$

$$Vm = 60/\rho 0/0.6 - 100/\rho s$$

(wherein, W is an internal pressure application amount (% by mass), M is a molecular weight (g) of an internal pressure application gas, $\rho 0$ is a bulk density ($g/cm^3$) of the pre-expanded particles, and $\rho s$ is a density ($g/cm^3$) of the thermoplastic resin composition),
said Ts is calculated by an equation below:

$$Ts = 237.3 \times Log (Ps \times 10000/6.1078)/(7.5 - Log (Ps \times 10000/6.1078)).$$

**Patentansprüche**

1. Partikelschaumgegenstand, umfassend eine Vielzahl von expandierten Partikeln, wobei

der Partikelschaumgegenstand eine thermoplastische Harzzusammensetzung enthält, die als Hauptkomponente ein polycarbonatbasiertes Harz mit einem aromatischen Gerüst enthält, und
der Partikelschaumgegenstand die Eigenschaften aufweist, dass ein Wert, erhalten durch Dividieren einer 10%-Druckspannung (MPa) des Partikelschaumgegenstands durch eine Dichte ($g/cm^3$), 9,0 ($MPa·cm^3/g$) oder mehr

beträgt, ein Anteil offener Zellen des Partikelschaumgegenstands 10% oder weniger beträgt und eine Dichte des Partikelschaumgegenstands 0.2 g/cm$^3$ oder weniger beträgt, wobei die 10%-Druckspannung, die Dichte und der Anteil offener Zellen des Partikelschaumgegenstands, wie in den Abschnitten (10% Compression Stress of Bead Expanded Article), (Density of Bead Expanded Article) bzw. (Open Cell Rate of Bead Expanded Article) der Beschreibung beschrieben, bestimmt werden.

2. Partikelschaumgegenstand gemäß Anspruch 1, wobei der Partikelschaumgegenstand die Eigenschaft aufweist, dass der durchschnittliche Luftdurchlässigkeitswiderstand, gemessen an einem aus dem Partikelschaumgegenstand geschnittenen Stück nach einem Verfahren, wie im Abschnitt (Average Air Permeability Resistance and Average Thickness of Bead Expanded Article) der Beschreibung beschrieben, 30 s oder mehr beträgt.

3. Partikelschaumgegenstand gemäß Anspruch 1, wobei der Partikelschaumgegenstand eine Schmelzrate, bestimmt durch ein Verfahren, wie im Abschnitt (Fusion Rate of Bead Expanded Article) der Beschreibung beschrieben, von 50% oder mehr aufweist.

4. Verwendung des Partikelschaumgegenstands, wie in Anspruch 1 definiert, zur Herstellung eines Harzverbunds, wobei der Partikelschaumgegenstand als Kernmaterial verwendet wird und eine faserverstärkte Harzschicht das Kernmaterial bedeckt.

5. Harzverbund, umfassend einen Partikelschaumgegenstand als Kernmaterial und eine faserverstärkte Harzschicht, die das Kernmaterial bedeckt, wobei das Kernmaterial der Partikelschaumgegenstand gemäß Anspruch 1 ist.

6. Verfahren zur Herstellung eines Partikelschaumgegenstands, umfassend die Schritte:

das Imprägnieren einer thermoplastischen Harzzusammensetzung, die als Hauptkomponente ein polycarbonatbasiertes Harz mit einem aromatischen Gerüst enthält, mit einem Treibmittel, um expandierbare Partikel herzustellen;
das Herstellen von vorexpandierten Partikeln durch Erhitzen der expandierbaren Partikel;
das Anlegen eines Innendrucks, um den vorexpandierten Partikeln eine sekundäre Expansionskraft zu verleihen; und
das Befüllen einer Form mit den vorexpandierten Partikeln, auf die der Innendruck angelegt ist, und das Einleiten von Dampf in die Form, um die vorexpandierten Partikel, auf die der Innendruck angelegt ist, sekundär zu expandieren, um einen Partikelschaumgegenstand zu erhalten,
wobei
der Dampf mit einem Druck von 0,8 MPa (Absolutdruck) oder mehr in die Form eingeführt wird,
der Innendruck auf die vorexpandierten Partikel so angelegt wird, dass die folgende Gleichung erfüllt wird:
Innendruck der Zelle beim Formen (Pm, absoluter Druck: MPa) $\geq$ Wasserdampfdruck beim Formen (Ps, absoluter Druck: MPa),
wobei Pm durch die folgende Gleichung berechnet wird:

$$Pm = Pf \times (Ts + 273)/293 \times V/Vm$$

(worin Pf ein Zellinnendruck (MPa) in den vorexpandierten Partikeln ist, Ts eine Sattdampftemperatur (°C) bei einem Dampfdruck ist, V ein Volumen (cm$^3$) eines Raums in den vorexpandierten Partikeln ist und Vm ein Volumen (cm$^3$) eines Raums in den vorexpandierten Partikeln ist, nachdem die vorexpandierten Partikel sekundär mit Dampf geschäumt und in die Form ohne Spalt gefüllt wurden),
Pf, V und Vm mit den folgenden Gleichungen berechnet werden:

$$Pf = 8,31 \times 293 \times (0,1 \times V/8,31/293 + W/M)/V$$

$$V = 60/\rho 0 - 100/\rho s$$

$$Vm = 60/\rho 0/0,6 - 100/\rho s$$

(worin W eine Innendruckanwendungsmenge (Massen-%) ist, M ein Molekulargewicht (g) eines Innendruckanwendungsgases ist, ρ0 eine Schüttdichte (g/cm³) der vorexpandierten Partikel ist und ps eine Dichte (g/cm³) der thermoplastischen Harzzusammensetzung ist),

wobei Ts durch die folgende Gleichung berechnet wird:

```
Ts = 237,3 × Log (Ps × 10000/6,1078)/(7,5 - Log (Ps × 10000/6,1078)).
```

**Revendications**

1. Article expansé en perles comprenant une pluralité de particules expansées, dans lequel

   ledit article expansé en perles contient une composition de résine thermoplastique contenant une résine à base de polycarbonate présentant un squelette aromatique en tant que composant principal, et

   ledit article expansé en perles présente des propriétés telles qu'une valeur obtenue en divisant une contrainte de compression de 10 % (MPa) dudit article expansé en perles par une masse volumique (g/cm³) est de 9,0 (MPa cm³/g) ou plus, un taux de cellules ouvertes dudit article expansé en perles est de 10 % ou moins et une masse volumique dudit article expansé en perles est de 0,2 g/cm³ ou moins, la contrainte de compression de 10 %, la masse volumique, et le taux de cellules ouvertes dudit article expansé en perles étant déterminés comme décrit dans les sections (Contrainte de compression de 10 % d'un article expansé en perles), (Masse volumique d'un article expansé en perles), et (Taux de cellules ouvertes d'un article expansé en perles) de la description, respectivement.

2. Article expansé en perles selon la revendication 1, dans lequel ledit article expansé en perles présente une propriété telle qu'une résistance moyenne de perméabilité à l'air mesurée à partir d'un morceau coupé dans ledit article expansé en perles par un procédé tel que décrit dans la section (Résistance moyenne de perméabilité à l'air et épaisseur moyenne d'un article expansé en perles) de la description est de 30 s ou plus.

3. Article expansé en perles selon la revendication 1, dans lequel ledit article expansé en perles présente un taux de fusion déterminé par un procédé tel que décrit dans la section (Taux de fusion d'un article expansé en perles) de la description de 50 % ou plus.

4. Utilisation de l'article expansé en perles défini dans la revendication 1 pour la formation d'un composite de résine, dans laquelle l'article expansé en perles est utilisé comme matériau de cœur, et une couche de résine renforcée par des fibres recouvre ledit matériau de cœur.

5. Composite de résine comprenant un article expansé en perles en tant que matériau de cœur et une couche de résine renforcée par des fibres recouvrant ledit matériau de cœur, dans lequel ledit matériau de cœur est l'article expansé en perles selon la revendication 1.

6. Procédé de production d'un article expansé en perles, comprenant les étapes consistant à :

   imprégner une composition de résine thermoplastique contenant une résine à base de polycarbonate présentant un squelette aromatique en tant que composant principal avec un agent d'expansion pour préparer des particules expansibles, préparer des particules pré-expansées en chauffant lesdites particules expansibles ;

   appliquer une pression interne pour conférer un pouvoir d'expansion secondaire auxdites particules pré-expansées ; et

   remplir un moule avec lesdites particules pré-expansées sur lesquelles la pression interne est appliquée et introduire de la vapeur d'eau dans ledit moule pour provoquer une expansion secondaire desdites particules pré-expansées sur lesquelles la pression interne est appliquée, pour obtenir un article expansé en perles,

   dans lequel ladite vapeur d'eau est introduite dans le moule à une pression de 0,8 MPa (pression absolue) ou plus, la pression interne est appliquée sur lesdites particules pré-expansées de manière à satisfaire une équation ci-dessous :

   pression interne de cellule au moment du moulage (Pm, pression absolue : MPa) ≥ pression de vapeur d'eau au moment du moulage (Ps, pression absolue : MPa), ladite Pm est calculée par une équation ci-dessous :

$$Pm = Pf \times (Ts + 273)/293 \times V/Vm$$

(dans laquelle, Pf est une pression interne de cellule (MPa) dans les particules pré-expansées, Ts est une température de vapeur d'eau à saturation (°C) à une pression de vapeur d'eau, V est un volume (cm$^3$) d'un espace dans les particules pré-expansées, et Vm est un volume (cm$^3$) d'un espace dans les particules pré-expansées après que les particules pré-expansées sont soumises à une expansion secondaire avec de la vapeur d'eau et sont introduites dans le moule sans espace),
lesdits Pf, V et Vm sont calculés par les équations ci-dessous :

$$Pf = 8,31 \times 293 \text{ x } (0,1 \times V/8,31/293 + W/M)/V$$

$$V = 60/\rho 0 - 100/\rho s$$

$$Vm = 60/\rho 0/0,6 - 100/\rho s$$

(dans lesquelles, W est une quantité d'application de pression interne (% en masse), M est un poids moléculaire (g) d'un gaz d'application de pression interne, $\rho$0 est une masse volumique apparente (g/cm$^3$) des particules pré-expansées, et ps est une masse volumique (g/cm$^3$) de la composition de résine thermoplastique),
ladite Ts est calculée par une équation ci-dessous :

$$Ts = 237,3 \times \text{Log } (Ps \times 10\,000/6,1078)/(7,5 - \text{Log } (Ps \times 10\,000/6,1078)).$$

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016188341 A